# EUROPEAN PATENT SPECIFICATION

(11) **EP 4 572 100 B1**
(45) Date of publication and mention of the grant of the patent: **24.06.2026**
(21) Application number: 23215870.9
(22) Date of filing: 12.12.2023
(51) Int. Cl.: H02K 5/132, E21B 43/12, F04C 13/00, F04D 13/08, F04D 13/10

(54) **ELECTRIC MOTOR SYSTEM FOR AN ELECTRIC SUBMERSIBLE PUMP SYSTEM, PROTECTOR SYSTEM FOR AN ELECTRIC SUBMERSIBLE PUMP SYSTEM AND ELECTRIC SUBMERSIBLE PUMP SYSTEM**
ELEKTROMOTORSYSTEM FÜR EIN ELEKTRISCHES TAUCHPUMPENSYSTEM, SCHUTZSYSTEM FÜR EIN ELEKTRISCHES TAUCHPUMPENSYSTEM UND ELEKTRISCHES TAUCHPUMPENSYSTEM
SYSTÈME DE MOTEUR ÉLECTRIQUE POUR SYSTÈME DE POMPE SUBMERSIBLE ÉLECTRIQUE, SYSTÈME DE PROTECTION POUR SYSTÈME DE POMPE SUBMERSIBLE ÉLECTRIQUE ET SYSTÈME DE POMPE SUBMERSIBLE ÉLECTRIQUE

(43) Date of publication of application: 18.06.2025
(73) Proprietor: Oil Dynamics GmbH, 69115 Heidelberg (DE)
(72) Inventor: Mohammadi, Ahmad, 69115 Heidelberg (DE)
(74) Representative: Altmann Stößel Dick Patentanwälte PartG mbB

(56) References cited:
- WO-A1-2016/053658
- WO-A1-2017/023320
- US-A1- 2007 224 057

## Description

### Technical Field

The present invention relates to an electric motor system for an electric submersible pump system, to a protector system for an electric submersible pump system and to an electric submersible pump system.

### Background art

In a conventional electric submersible pump system, submersible electric motors are filled with motor oil as a lubricant and also as an insulator between rotor and the stator due to its lubricity and dielectric properties. Such a submersible pump system is disclosed in US 2007/224057 A1. The protectors that are used to seal the electric motor from the well fluid also are filled with a same motor oil. Such a protector is disclosed in WO 2016/053658 A1. In the previous practices, electric motors and the protectors are transported to the field as empty. Later they are filled with motor oil during installation.

Despite the advantages provided by these electric submersible pump systems, there is still potential for improvements. Particularly, filling the electric submersible pump equipment with motor oil is a time-consuming process. Particularly at fields with a cold weather condition, the filling process will be effortful when the viscosity of oil is relatively high because of low ambient temperature. Moreover, air bubbles take more time to travel from bottom to the top of the equipment to the vent ports. Further, the installation equipment at the field is expensive and are paid per hour or per day. Furthermore, trapped air pockets inside the equipment during the filling process cause many problems for operation.

### Problem to be solved

It is therefore desirable to provide an electric motor system for an electric submersible pump system, a protector system for an electric submersible pump system and an electric submersible pump system configured to at least minimize or even overcome the aforementioned drawbacks. Particularly, it is an aim of the present disclosure to provide an electric motor system for an electric submersible pump system, a protector system for an electric submersible pump system and an electric submersible pump system, wherein the electric motor and the protector are pre-filled in the shop and then transported to the field for installation so as to reduce the time and costs for installation at the field and that allows a more controlled filling process.

### Summary

This problem is addressed by an electric motor system for an electric submersible pump system, a protector system for an electric submersible pump system and an electric submersible pump system with the features of the independent claims 1, 8 and 15. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to a first aspect of the invention, an electric motor system for an electric submersible pump system is defined in claim 1. The electric motor system comprises an electric motor configured to operate an electric submersible pump of the electric submersible pump system. The electric motor system comprises a motor oil. The electric motor comprises a base portion defining a base space, a head portion defining a head space, an interior space, a first line, a first port, a second port, a first valve, a first vent port and a second vent port. The first line is connected to an outside of the electric motor through the first port. The first line is connected to the interior space through the second port. The interior space is filled with the motor oil. The first valve is configured to selectively block and unblock the first line. The first vent port is configured to vent air from the interior space to the outside of the electric motor. The second vent port is configured to vent air from the head space to the outside of the electric motor. The second vent port is configured to be releasably connected to a compensator chamber. The compensator chamber comprises a first chamber portion filled with pressurized gas, a second chamber portion filled with the motor oil, a piston separating the first and second chamber portions, a compensator chamber vent port, and a motor oil line. The compensator chamber vent port is configured to vent air from the second chamber portion. The second chamber portion is releasably connected to the second vent port by means of the motor oil line.

Thus, the interior space of the electric motor is already filled with motor oil before installation at the field or on site. Therefore, the installation will be faster if the equipment is pre-filled with motor oil. Further, the time necessary for filling the electric motor with motor oil at the installation site is omitted thereby reducing the time necessary for installation. Reducing installation time automatically results in lower costs of installation. By using special tools, equipment, and procedures, filling process can be performed much more controlled in the shop in compare to field to avoid air inside the equipment. Particularly, since the ambient temperature can change during transportation or at the field if compared to the shop condition, a compensator chamber is utilized to compensate oil expansion or contraction after the electric motor has been filled with the motor oil and during transportation of the electric motor system.

The first port may be located at the base portion. Alternatively or in addition, the second port may be located at the base portion. Thus, the first port and the second port, respectively, may be used as drain/fill port so as to fill the interior space with motor oil or drain motor oil from the interior space.

The first vent port may be located at the head portion. Alternatively or in addition, the second vent port may be located at the head portion. Thus, any air present in the interior space or head space may be reliably vented therefrom.

The electric motor may further comprises a second line, a third port, a fourth port, a third vent port, and a second valve. The second line may be connected to the base space through the third port. The second line may be connected to the interior space through the fourth port. The second valve may be configured to selectively communicate the third port, the fourth port and the third vent port. Thus, the second line may be used when connecting the electric motor to another electric motor so as to form a kind of tandem motor assembly wherein one electric motor sits on top of the other electric motor. Then oil will fill from lower tandem motor head space from the third port and vented from the third vent port in the base portion of the upper electric motor. Then, the second valve will block the third vent port and connect the third port to the fourth port. Therefore, there will be communication between lower tandem motor and upper tandem motor. At the ends, all the ports from equipment to the well will be plugged to ensure zero leakage in operation.

The third port may be located at the base portion. Alternatively or in addition, the fourth port may be located at the base portion. Alternatively or in addition, the third vent port may be located at the base portion. Thus, the connection of two electric motors is facilitated.

The second valve may be a three way valve or act as a three way valve. Thus, venting air as well as providing a fluid communication between two electric motors may be facilitated.

The electric motor may further comprise a third line, a fifth port, a sixth port and a third valve. The third line may be connected to the outside of the electric motor through the fifth port. The third line may be connected to the head space through the sixth port. The third valve may be configured to selectively block and unblock the third line. When providing a protector and motor connection, protector base portion sits on the upper tandem motor head portion. Then, oil will fill from lower tandem motor head from the fifth port and vented from a port in the protector base portion.

The fifth port may be located at the head portion. Alternatively or in addition, the sixth port may be located at the head portion. Thus, fluid communication and venting is facilitated.

The electric motor may further comprise a shaft. The shaft may extend from the head space through the interior space to the base space. Thus, the electric motor may operate the shaft so as to drive an submersible pump.

The electric motor may further comprises at least a first bearing and a second bearing. The first bearing may be configured to radially support the shaft at the base portion. The second bearing may be configured to radially support the shaft at the head portion. Thus, rotating of the shaft is facilitated.

The motor oil line may be flexible. Thus, the motor oil line may be provided as appropriate.

The motor oil line may be a tube or hose. Thus, a standard item for supplying motor oil may be used.

The electric motor system may further comprise a first cap configured to be releasably attached to the base portion so as to seal the base space. Such a cap serves for shipping purposes and avoids any oil leakage.

The electric motor system may further comprise a second cap configured to be releasably attached to the head portion so as to seal the head space. Such a cap serves for shipping purposes and avoids any oil leakage.

According to a second aspect of the present invention, a protector system for an electric submersible pump system is defined in claim 8. The protector system comprises a protector configured to seal an electric motor for operating an electric submersible pump of the electric submersible pump system as described above. The protector system further a motor oil. The protector comprises a base portion defining a base space, a head portion defining a head space, an interior space, a first line, a first port, a second port, a first valve, a first vent port and a second vent port. The first line is connected to an outside of the protector through the first port. The first line is connected to the interior space through the second port. The interior space is filled with the motor oil. The first valve is configured to selectively block and unblock the first line. The first vent port is configured to vent air from the interior space to the outside of the protector. The second vent port is configured to vent air from the head space to the outside of the protector. The second vent port is configured to be releasably connected to a compensator chamber. The compensator chamber comprises a first chamber portion filled with pressurized gas, a second chamber portion filled with the motor oil, a piston separating the first and second chamber portions, a compensator chamber vent port, and a motor oil line. The compensator chamber vent port is configured to vent air from the second chamber portion. The second chamber portion is releasably connected to the second vent port by means of the motor oil line.

Thus, the interior space of the protector is already filled with motor oil before installation at the field. Therefore, the installation will be faster if the equipment is pre-filled with motor oil. Further, the time necessary for filling the protector with motor oil at the installation site is omitted thereby reducing the time necessary for installation. Reducing installation time automatically results in lower costs of installation. By using special tools, equipment, and procedures, filling process can be performed much more controlled in the shop in compare to field to avoid air inside the equipment. Particularly, since the ambient temperature can change during transportation or at the field if compared to the shop condition, a compensator chamber is utilized to compensate oil expansion or contraction after the electric motor has been filled with the motor oil and during transportation of the electric motor system.

The first port may be located at the base portion. Alternatively or in addition, the second port may be located at the base portion. Thus, the first port and the second port, respectively, may be used as drain/fill port so as to fill the interior space with motor oil or drain motor oil from the interior space.

The first vent port may be located at the head portion. Alternatively or in addition, the second vent port may be located at the head portion. Thus, any air present in the interior space or head space may be reliably vented therefrom.

The protector may further comprise a second line, a third port, a fourth port, a third vent port, and a second valve. The second line may be connected to the base space through the third port. The second line may be connected to the interior space through the fourth port. The second valve is configured to selectively communicate the third port, the fourth port and the third vent port. Thus, the second line may be used when connecting the protector to an electric motor wherein protector sits on top of the electric motor. Then oil will fill from lower motor head space from the third port and vented from the third vent port in the base portion of the upper protector. Then, the second valve will block the third vent port and connect the third port to the fourth port. Therefore, there will be communication between lower tandem motor and upper protector. At the ends, all the ports from equipment to the well will be plugged to ensure zero leakage in operation.

The third port may be located at the base portion. Alternatively or in addition, the fourth port may be located at the base portion. Alternatively or in addition, the third vent port may be located at the base portion. Thus, the connection of the protector and an electric motor is facilitated.

The second valve may be a three way valve or act as a three way valve. Thus, venting air as well as providing a fluid communication between the protector and an electric motor may be facilitated.

The protector may further comprise a third line, a fifth port and a sixth port. The third line may be connected to the interior space through the fifth port. The third line may be connected to the head space through the sixth port. When providing a protector and motor connection, protector base portion sits on the upper tandem motor head portion. Then, oil will fill from lower tandem motor head from the fifth port and vented from a port in the protector base portion.

The fifth port may be located at the head portion. Alternatively or in addition, the sixth port may be located at the head portion. Thus, fluid communication and venting is facilitated.

The protector may further comprise a shaft. The shaft may extend from the head space through the interior space to the base space. Thus, the protector may allow an electric motor to operate the shaft so as to drive an submersible pump.

The protector may further comprise at least a first bearing and a second bearing. The first bearing may be configured to radially support the shaft at the base portion. The second bearing may be configured to radially support the shaft at the head portion. Thus, rotating of the shaft is facilitated.

The protector may further comprise at least a first sealing member and a second sealing member. The first sealing member may be configured to seal the shaft at the base portion. The second sealing member may be configured to seal the shaft at the head portion.

The first sealing member may be a first mechanical seal. Alternatively or in addition, the second sealing member may be a second mechanical seal.

The motor oil line may be flexible. Thus, the motor oil line may be provided as appropriate.

The motor oil line may be a tube or hose. Thus, a standard item for supplying motor oil may be used.

The protector system may further comprise a first cap configured to be releasably attached to the base portion so as to seal the base space. Such a cap serves for shipping purposes and avoids any oil leakage.

The protector system may further comprise a second cap configured to be releasably attached to the head portion so as to seal the head space. Such a cap serves for shipping purposes and avoids any oil leakage.

According to a further aspect of the present invention, an electric submersible pump system is defined in claim 15. The electric submersible pump system comprises an electric submersible pump, at least first electric motor system according to any one of the embodiments disclosed before or disclosed hereinafter, at least a second electric motor system according to any one the embodiments disclosed before or disclosed hereinafter and/or at least one protector system according to any one of the embodiments disclosed before or disclosed hereinafter. The base portion of the electric motor of the first electric motor system is connected to the head portion of the electric motor of the second electric motor system such that the base space of the first electric motor is in fluid communication with the head space of the electric motor of the second electric motor system an/or the base portion of the protector is connected to the head portion of the electric motor of the first electric motor system such that the base space of the base space of the protector is in fluid communication with the head space of the electric motor of the second electric motor system. Thus, a tandem assembly may be provided wherein a protector sits on top of a first electric motor and/or a first electric motor sits on top of a second electric motor.

The second valve of the first electric motor or the protector may be switched that the interior space of the electric motor of the first electric motor system is in fluid communication with the head space of the electric motor of the second electric motor system and/or the second valve of the protector may be switched that the interior space of the protector is in fluid communication with the head space of the first electric motor. Thus, a fluid communication between the first electric motor and the protector and/or the second electric motor may be provided.

The first ports, the first vent ports, the second vent ports, the third vent ports of the first electric motor system and the second electric motor system and/or the protector system may be closed. Thus, any oil leakage is prevented.

The term "electric motor system" as used herein is a broad term and is to be given its ordinary and customary meaning to a person of ordinary skill in the art and is not to be limited to a special or customized meaning. The term specifically may refer, without limitation, to a system that comprises an electric motor configured to operate an electric submersible pump of the electric submersible pump system and further constructional members including at least a compensator chamber.

The term "electric submersible pump system" as used herein is a broad term and is to be given its ordinary and customary meaning to a person of ordinary skill in the art and is not to be limited to a special or customized meaning. The term specifically may refer, without limitation, to a system that comprises an electric submersible pump and further constructional members including at least an electric motor for operating the electric submersible pump.

The term "electric submersible pump" as used herein is a broad term and is to be given its ordinary and customary meaning to a person of ordinary skill in the art and is not to be limited to a special or customized meaning. The term specifically may refer, without limitation, to a device which has a hermetically sealed motor close-coupled to the pump body. The whole assembly is submerged in the fluid to be pumped. A main advantage of this type of pump is that it allows a high flow production with relatively low cost. Submersible pumps push fluid to the surface, rather than jet pumps, which create a vacuum and rely upon atmospheric pressure. Submersible pumps use pressurized fluid from the surface to drive a hydraulic motor downhole, rather than an electric motor, and are used in heavy oil applications with heated water as the motive fluid. Electric submersible pumps are multistage centrifugal pumps operating in a vertical position or in a horizontal position. Liquids, accelerated by the impeller, lose their kinetic energy in the diffuser, where a conversion of kinetic to pressure energy takes place. This is the main operational mechanism of radial and mixed flow pumps. The pump shaft is connected to the gas separator or the protector by a mechanical coupling at the bottom of the pump. Fluids enter the pump through an intake screen and are lifted by the pump stages. Other parts include the radial bearings (bushings) distributed along the length of the shaft, providing radial support to the pump shaft. An optional thrust bearing takes up part of the axial forces arising in the pump, but most of those forces are absorbed by the protector's thrust bearing. Submersible pumps are used in oil production to provide a relatively efficient form of "artificial lift", able to operate across a broad range of flow rates and depths. By decreasing the pressure at the bottom of the well (by lowering bottom-hole flowing pressure, or increasing drawdown), significantly more oil can be produced from the well when compared with natural production. The pumps are typically electrically powered, referred to as Electrical Submersible Pumps (ESP). ESP systems consist of both surface components (housed in the production facility, for example an oil platform), and sub-surface components (found in the well hole). Surface components include the motor controller (often a variable speed controller), surface cables and transformers. The subsurface components are deployed by attaching to the downhole end of a tubing string, while at the surface, and then lowered into the well bore along with the tubing. A high-voltage alternating-current source at the surface drives the subsurface motor. The subsurface components generally include a pump portion and a motor portion, with the motor downhole from the pump. The motor rotates a shaft that, in turn, rotates pump impellers to lift fluid through production tubing to the surface. These components must reliably work at high temperatures of up to such as 150 °C, 200 °C or even more and high pressures of up to 34 MPa, from deep wells of up to 3.7 km deep with high energy requirements such as 1000 horsepower (750 kW), 1300 horsepower or even more. The pump itself is a multi-stage unit, with the number of stages being determined by the operating requirements. Each stage includes an impeller and diffuser. Each impeller is coupled to the rotating shaft and accelerates fluid from near the shaft radially outward. The fluid then enters a non-rotating diffuser, which is not coupled to the shaft and contains vanes that direct fluid back toward the shaft. The motor used to drive the pump is typically a three-phase, squirrel cage induction motor but may also be a permanent magnet motor which has a better efficiency than a squirrel cage induction motor . ESP assemblies may also include protectors which are also called seals coupled to the shaft between the motor and pump; screens to reject sand; and fluid separators at the pump intake that separate gas, oil and water. ESPs have dramatically lower efficiencies with significant fractions of gas, greater than about 10% volume at the pump intake, so separating gas from oil prior to the pump can be important. Some ESPs include a water/oil separator which permits water to be re-injected downhole. As some wells produce up to 90% water, and fluid lift is a significant cost, re-injecting water before lifting it to the surface can reduce energy consumption and improve economics Given ESPs' high rotational speed of up to 4000 rpm (67 Hz to 120 Hz) and tight clearances, they are not very tolerant of solids, such as sand.

The term "protector" as used herein is a broad term and is to be given its ordinary and customary meaning to a person of ordinary skill in the art and is not to be limited to a special or customized meaning. The term specifically may refer, without limitation, to a device which is configured to hermetically seal an electric motor of an electric submersible pump.

The term "protector system" as used herein is a broad term and is to be given its ordinary and customary meaning to a person of ordinary skill in the art and is not to be limited to a special or customized meaning. The term specifically may refer, without limitation, to a system that comprises a protector configured to hermetically seal an electric motor of an electric submersible pump and further constructional members including at least a compensator chamber.

The term "compensator chamber" as used herein is a broad term and is to be given its ordinary and customary meaning to a person of ordinary skill in the art and is not to be limited to a special or customized meaning. The term specifically may refer, without limitation, to a device defining a chamber used to compensate oil expansion or contraction in an electric motor or protector during transportation and before installation of the electric motor or protector. After the electric motor or protector have been installed at the field or on site, the compensator chamber will be removed from the electric motor or protector.

The term "port" as used herein is a broad term and is to be given its ordinary and customary meaning to a person of ordinary skill in the art and is not to be limited to a special or customized meaning. The term specifically may refer, without limitation, to an opening through which a fluidic medium such as a liquid or gas may enter or flow.

The term "vent port" as used herein is a broad term and is to be given its ordinary and customary meaning to a person of ordinary skill in the art and is not to be limited to a special or customized meaning. The term specifically may refer, without limitation, to an opening through which a gas such as air may be discharged from an interior portion to an outer portion such as a surrounding.

The term "motor oil" as used herein is a broad term and is to be given its ordinary and customary meaning to a person of ordinary skill in the art and is not to be limited to a special or customized meaning. The term specifically may refer, without limitation, to any liquid that is configured to be used as lubricant for an electric motor and an insulator between rotor and the stator due to its lubricity and dielectric properties.

The term "line" as used herein is a broad term and is to be given its ordinary and customary meaning to a person of ordinary skill in the art and is not to be limited to a special or customized meaning. The term specifically may refer, without limitation, to any device through which a fluidic medium may flow such as a pipe, tube, hose, channel or any combination thereof.

The terms "head portion" and "bottom portion" as used herein are broad terms and are to be given its ordinary and customary meaning to a person of ordinary skill in the art and are not to be limited to a special or customized meaning. The term specifically may refer, without limitation, to portions of an electric motor or protector defined by a direction of gravity. Particularly, a head portion is arranged above a bottom portion with respect to a direction of gravity.

The term "space" as used herein is a broad term and is to be given its ordinary and customary meaning to a person of ordinary skill in the art and is not to be limited to a special or customized meaning. The term specifically may refer, without limitation, to a volume having predefined extensions.

The term "mechanical seal" as used herein is a broad term and is to be given its ordinary and customary meaning to a person of ordinary skill in the art and is not to be limited to a special or customized meaning. The term specifically may refer, without limitation, to a device that helps join systems and mechanisms together by preventing leakage (e.g. in a pumping system), containing pressure, or excluding contamination. The effectiveness of a seal is dependent on adhesion in the case of sealants and compression in the case of gaskets.

The terms "first", "second", "third", "fourth", "fifth" and the like as used herein merely serve to distinguish between respective constructional members and are not intended to define any specific order of presence or importance.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the defined in the appended claims invention is not restricted by the preferred embodiments. The embodiments are schematically depicted in the Figures. Therein, identical reference numbers in these Figures refer to identical or functionally comparable elements.

In the Figures:
- Figure 1: shows a cross-sectional view of an electric motor system according to an embodiment of the present invention;
- Figure 2: shows a cross-sectional view of a protector system according to an embodiment of the present invention; and
- Figure 3: shows a partial cross-sectional view of an electric submersible pump system according to an embodiment of the present invention.

### Detailed description of the embodiments

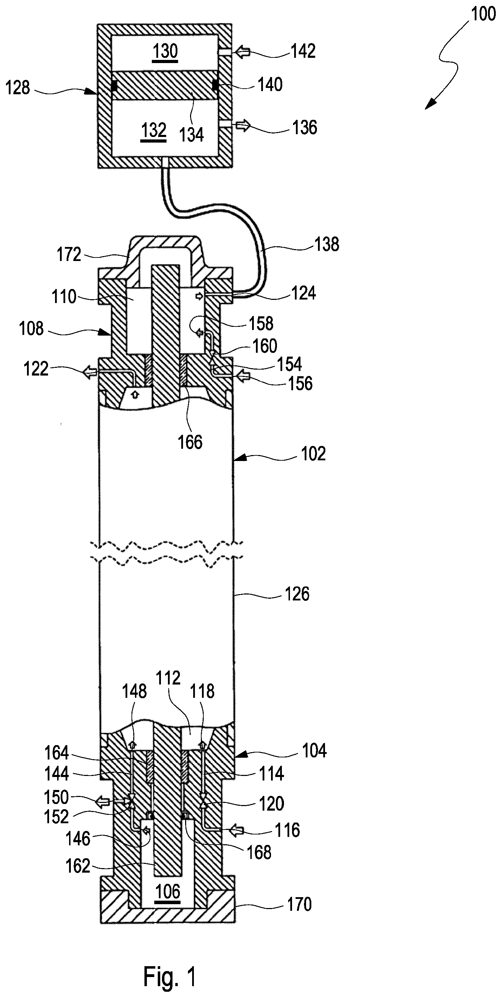

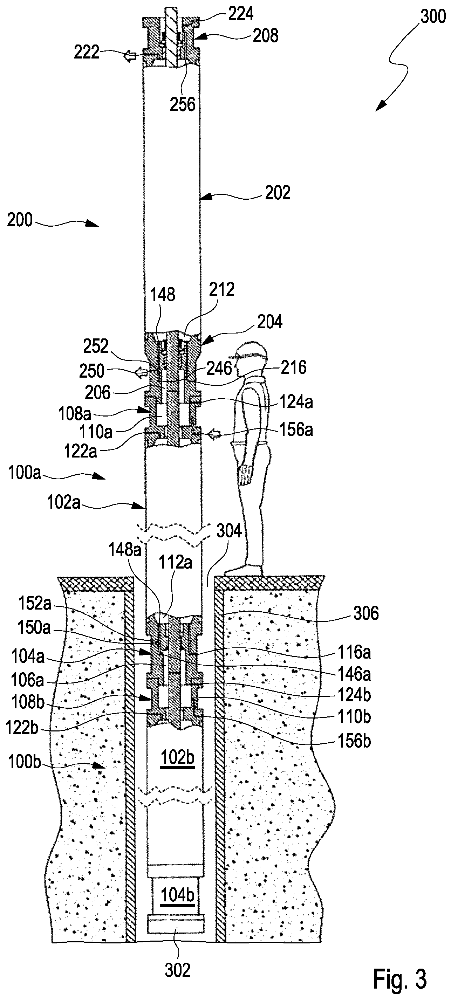

Figure 1 shows a cross-sectional view of an electric motor system 100 according to an embodiment of the present invention. The electric motor system is configured to be used with an electric submersible pump system 300 such as shown in Figure 3.

The electric motor system 100 comprises an electric motor 102 configured to operate an electric submersible pump 302 (Fig. 3) of the electric submersible pump system 300. The electric motor 102 is formed substantially cylindrically. The electric motor 102 comprises a base portion 104 defining a base space 106, a head portion 108 defining a head space 110, an interior space 112, a first line 114, a first port 116, a second port 118, a first valve 120, a first vent port 122 and a second vent port 124. The interior space 112 is formed in a middle or central portion 126 of the electric motor 102. The interior space 112 is larger than the head space 110 and the base space 106. The interior space 112 is filled with motor oil. The first line 114 is formed as a channel within a wall of the electric motor 102. The first port 116 is located at the base portion 104. The second port 118 is located at the base portion 104. The first line 114 is connected to an outside of the electric motor 102 through the first port 116. Further, the first line 114 is connected to the interior space 112 through the second port 118. The first valve 120 is arranged within the first line 114. The first valve 120 is configured to selectively block and unblock the first line 114. The first vent port 122 is located at the head portion 108. The first vent port 122 is configured to vent air from the interior space 112 to the outside of the electric motor 102. The second vent port 124 is located at the head portion 108. The second vent port 124 is configured to vent air from the head space 110 to the outside of the electric motor 102.

As will be described in further detail below, the second vent port 124 is configured to be releasably connected to a compensator chamber 128. The compensator chamber 128 comprises a first chamber portion 130 filled with pressurized gas, a second chamber portion 132 filled with motor oil, a piston 134 separating the first and second chamber portions 130, 132, a compensator chamber vent port 136, and a motor oil line 138. The compensator chamber vent port 136 is configured to vent air from the second chamber portion 132. The second chamber portion 132 is releasably connected to the second vent port 124 by means of the motor oil line 138. The piston 134 comprises a sealing member 140 such as an O-ring for hermetically separating the first and second chamber portions 132 from one another. The compensator chamber 128 further comprises a pressurized gas supply port 142 which is configured to be connected to a pressurized gas source (not shown in detail) for filling the first compensator chamber 128 portion with pressurized gas. The pressurized gas may be pressurized air. The motor oil line 138 is flexible. For example, the motor oil line 138 is a tube or hose.

The electric motor 102 further comprises a second line 144, a third port 146, a fourth port 148, a third vent port 150, and a second valve 152. The third port 146 is located at the base portion 104. The fourth port 148 is located at the base portion 104. The third vent port 150 is located at the base portion 104. The second line 144 is connected to the base space 106 through the third port 146. Further, the second line 144 is connected to the interior space 112 through the fourth port 148. The second valve 152 is configured to selectively communicate the third port 146, the fourth port 148 and the third vent port 150. The second valve 152 is arranged within the second line 144. The second line 144 is formed a channel within the wall of the base portion 104. The second valve 152 is a three way valve. For example, the second valve 152 is a three way valve. Alternatively, the second valve 152 is formed by two or more valves acting as a three way valve.

The electric motor 102 further comprises a third line 154, a fifth port 156, a sixth port 158 and a third valve 160. The fifth port 156 is located at the head portion 108. The sixth port 158 is located at the head portion 108. The third line 154 is formed as a channel within the head portion 108. The third line 154 is connected to the outside of the electric motor 102 through the fifth port 156. The third line 154 is connected to the head space 110 through the sixth port 158. The third valve 160 is arranged within the third line 154. The third valve 160 is configured to selectively block and unblock the third line 154.

The electric motor 102 further comprises a shaft 162. The shaft 162 extends from the head space 110 through the interior space 112 to the base space 106. The electric motor 102 further comprises at least a first bearing 164 and a second bearing 166. The first bearing 164 is configured to radially support the shaft 162 at the base portion 104. The second bearing 166 is configured to radially support the shaft 162 at the head portion 108. Further, the electric motor 102 comprises a lip seal 168 configured to prevent oil leakage from the interior space 112 to an outside during run in a hole assembly. The lip seal 168 is located at the base portion 104 around the shaft 162 and adjacent the base space 106.

The electric motor system 100 further comprises a first cap 170 configured to be releasably attached to the base portion 104 so as to seal the base space 106. The electric motor system 100 further comprises a second cap 172 configured to be releasably attached to the head portion 108 so as to seal the head space 110.

An operation and function of the electric motor system 100 will be described hereinafter. For performing oil prefill, the fourth port 148 in the base portion 104 of the electric motor 102 will be closed by means of the second valve 152. The filling of the interior space 112 with motor oil will be done through the first valve 120 acting as a drain/fill valve by opening the first valve 120. Further, the air inside the electric motor 102 will be vented first through the first vent port 122 and then through the compensator chamber vent port 136 from compensator chamber 128.

As explained above, the second valve 152 acting as a three-way valve and the first valve 120 acting as drain/fill valve are embedded. These valves connect or block the internal ports inside the head portion 108 and base portion 104. Further, the first vent port 122 is located at the head portion 108 of the electric motor 102. Further, the fifth port 156 together with the third valve 160 is implanted inside the head portion 108. The communication between oil inside the electric motor 102 and the well fluid will be through the fifth port 156.

Since the ambient temperature can change during transportation or at the field if compared to the shop condition, the compensator chamber 128 is utilized to compensate oil expansion or contraction. The second vent port 124 is considered to connect the head portion 108 to the second chamber portion 132 of the compensator chamber 128 through the flexible motor oil line 138. The piston 134 can move inside the compensator chamber 128 in case of expansion or extraction of the oil inside the electric motor system 100. After installation of the electric motor system 100 on site, the compensator chamber 128 will be removed.

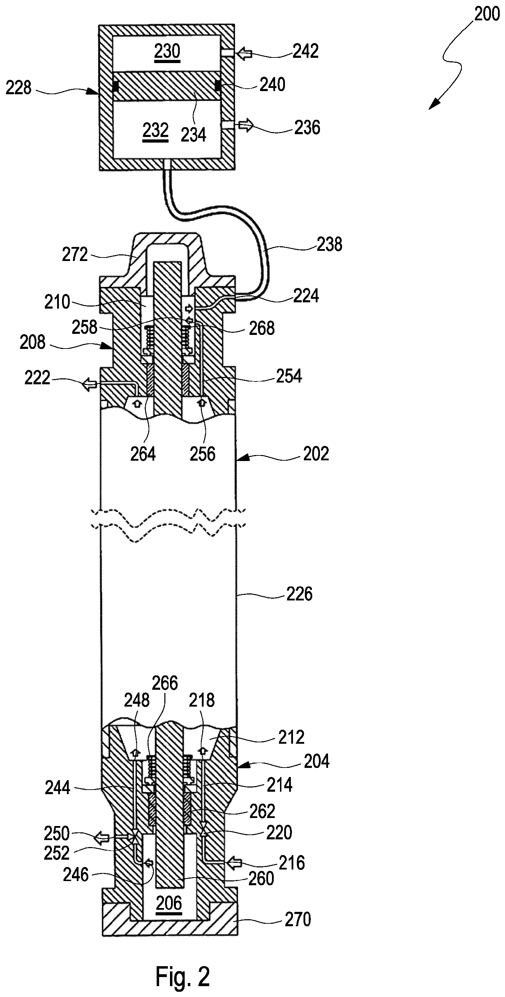

Figure 2 shows a cross-sectional view of a protector system 200 according to an embodiment of the present invention. The protector system 200 is configured to be used with an electric submersible pump system 300 as shown in Figure 3.

The protector system 200 comprises a protector 202 configured to seal an electric motor 102 for operating an electric submersible pump 302 of the electric submersible pump system 300 (Fig. 3). The protector 202 is formed substantially cylindrically. The protector 202 comprises a base portion 204 defining a base space 206, a head portion 208 defining a head space 210, an interior space 212, a first line 214, a first port 216, a second port 218, a first valve 220, a first vent port 222 and a second vent port 224. The interior space 212 is formed in a middle or central portion 226 of the protector 202. The interior space 212 is larger than the head space 210 and the base space 206. The interior space 212 is filled with motor oil. The first line 214 is formed as a channel within a wall of the protector 202. The first port 216 is located at the base portion 204. The second port 218 is located at the base portion 204. The first line 214 is connected to an outside of the protector 202 through the first port 216. Further, the first line 214 is connected to the interior space 212 through the second port 218. The first valve 220 is arranged within the first line 214. The first valve 220 is configured to selectively block and unblock the first line 214. The first vent port 222 is located at the head portion 208. The first vent port 222 is configured to vent air from the interior space 212 to the outside of the protector 202. The second vent port 224 is located at the head portion 208. The second vent port 224 is configured to vent air from the head space 210 to the outside of the protector 202.

The second vent port 224 is configured to be releasably connected to a compensator chamber 228. The compensator chamber 228 comprises a first chamber portion 230 filled with pressurized gas, a second chamber portion 232 filled with motor oil, a piston 234 separating the first and second chamber portions 232, a compensator chamber vent port 236, and a motor oil line 238. The compensator chamber vent port 236 is configured to vent air from the second chamber portion 232. The second chamber portion 232 is releasably connected to the second vent port 224 by means of the motor oil line 238. The piston 234 comprises a sealing member 240 such as an O-ring for hermetically separating the first and second chamber portions 232 from one another. The compensator chamber 228 further comprises a pressurized gas supply port 242 which is configured to be connected to a pressurized gas source (not shown in detail) for filling the first compensator chamber 228 portion with pressurized gas. The pressurized gas may be pressurized air. The motor oil line 238 is flexible. For example, the motor oil line 238 is a tube or hose.

The protector 202 further comprises a second line 244, a third port 246, a fourth port 248, a third vent port 250, and a second valve 252. The third port 246 is located at the base portion 204. The fourth port 248 is located at the base portion 204. The third vent port 250 is located at the base portion 204. The second line 244 is connected to the base space 206 through the third port 246. Further, the second line 244 is connected to the interior space 212 through the fourth port 248. The second valve 252 is configured to selectively communicate the third port 246, the fourth port 248 and the third vent port 250. The second valve 252 is arranged within the second line 244. The second line 244 is formed a channel within the wall of the base portion 204. The second valve 252 is a three way valve. For example, the second valve 252 is a three way valve. Alternatively, the second valve 252 is formed by two or more valves acting as a three way valve.

The protector 202 further comprises a third line 254, a fifth port 256 and a sixth port 258. The fifth port 256 is located at the head portion 208. The sixth port 258 is located at the head portion 208. The third line 254 is formed as a channel within the head portion 208. The third line 254 is connected to the interior space 212 through the fifth port 256. The third line 254 is connected to the head space 210 through the sixth port 258.

The protector 202 further comprises a shaft 260. The shaft 260 extends from the head space 210 through the interior space 212 to the base space 206. The protector 202 further comprises at least a first bearing 262 and a second bearing 264. The first bearing 262 is configured to radially support the shaft 260 at the base portion 204. The second bearing 264 is configured to radially support the shaft 260 at the head portion 208. The protector 202 further comprises at least a first sealing member 266 and a second sealing member 268. The first sealing member 266 is configured to seal the shaft 260 at the base portion 204. The second bearing 264 is configured to seal the shaft 260 at the head portion 208. The first and second sealing members 266, 268 may be mechanical sealing members.

The protector 202 system 200 further comprise a first cap 270 configured to be releasably attached to the base portion 204 so as to seal the base space 206. The protector 202 system 200 further comprises a second cap 272 configured to be releasably attached to the head portion 208 so as to seal the head space 210.

An operation and function of the protector 202 system 200 will be described hereinafter. For performing oil prefill, the fourth port 248 in the base portion 204 of the protector 202 will be closed by means of the second valve 252. The filling of the interior space 212 with oil will be done through the first valve 220 acting as a drain/fill valve by opening the first valve 220. Further, the air inside the electric motor 102 will be vented first through the first vent port 222 and then through the compensator chamber vent port 236 from compensator chamber 228.

As explained above, the second valve 252 acting as a three-way valve and the first valve 220 acting as drain/fill valve are embedded. These valves connect or block the internal ports inside the head portion 208 and base portion 204. Further, the first vent port 222 is located at the head portion 208 of the protector 202. Further, the fifth port 256 being an internal port is implanted inside the head portion 208. The communication between oil inside the protector 202 and the well fluid will be through the fifth port 256.

Since the ambient temperature can change during transportation or at the field if compared to the shop condition, the compensator chamber 228 is utilized to compensate oil expansion or contraction. The second vent port 224 is considered to connect the head portion 208 to the second chamber portion 232 of the compensator chamber 228 through the flexible motor oil line 238. The piston 234 can move inside the compensator chamber 228 in case of expansion or extraction of the oil inside the protector 202 system 200. After installation of the protector system 200 on site, the compensator chamber 228 will be removed.

Figure 3 shows a partial cross-sectional view of an electric submersible pump system 300 according to an embodiment of the present invention. The electric submersible pump system 300 comprises an electric submersible pump 302. The electric submersible pump 302 is configured to be submerged in a fluid to be pumped. The fluid is particularly a well fluid pumped in a well hole 304 defined in a well casing 306. The electric submersible pump system 300 further comprises at least a first electric motor system 100a. The first electric motor system 100a is particularly designed as described with reference to the electric motor system 100 shown in Figure 1. Thus, any explanations as given with respect to the electric motor system 100 shown in Figure 1 correspondingly apply to the first electric motor system 100a and corresponding constructional members bear like reference numerals added by the index "a". The electric submersible pump system 300 further comprises at least one protector 202. The protector 202 is particularly designed as described with reference to Figure 2. Prior to installation, the caps 170a, 172a, 270, 272, the compensator chamber 128a, 228 and the motor oil line 138a, 238 will be removed and plugged at the second vent ports 124a, 224 of the electric motor 102a and the protector 202. The protector 202 is arranged above or on top of the first electric motor system 100a. The base portion 204 of the protector 202 is connected to the head portion 108a of the electric motor 102a of the first electric motor system 100a such that the base space 206 of the protector 202 is in fluid communication with the head space 110a of the electric motor 102a of the first electric motor system 100a. The second valve 252 of the protector 202 is switched that the interior space 212 of the protector 202 is in fluid communication with the head space 110a of the electric motor 102a of the first electric motor system 100a. The first ports 116a, 216, the first vent ports 122a, 222, the second vent ports 124a, 224, the third vent ports 150a, 250 of the electric motor 102a of the first electric motor system 100a and the protector 202 are closed.

Thus, as shown in Figure 3, the base portion 204 of the protector 202 sits on the head portion 108a of the electric motor 102a of the first electric motor system 100a. Then, oil will fill from the head portion 108a of the electric motor 102a of the first electric motor system 100a from the fifth port 256 and vented from the third vent port 250 in the base portion 204 of the protector 202. Then, the second valve 252 will block the third vent port 250 of the protector 202 and connect the fourth port 248 of the protector 202 to the third port 246 of the protector 202. Therefore, there will be fluid communication between protector 202 and the electric motor 102a of the first electric motor system 100a. At the ends, all the ports from equipment to the well will be plugged to ensure zero leakage in operation.

As is further shown in Figure 3, alternatively or in addition to the protector 202, the electric submersible pump system 300 may further comprise a second electric motor system 100b. The second electric motor system 100b may be designed as described with reference to the electric motor system 100 shown in Figure 1. Thus, any explanations as given with respect to the electric motor system 100 shown in Figure 1 correspondingly apply to the second electric motor system 100b and corresponding constructional members bear like reference numerals added by the index "b". The first electric motor system 100a and the second electric motor system 100b form a tandem motor assembly with the electric motor 102a of the first electric motor system 100a arranged on top of the electric motor 102b of the second electric motor system 100b. In this case, the base portion 104a of the electric motor 102a of the first electric motor system 100a is connected to the head portion 108b of the electric motor 102b of the second electric motor system 100b such that the base space 106a of the electric motor 102a of the first electric motor system 100a is in fluid communication with the head space 110b of the electric motor 102b of the second electric motor system 100b. The second valve 152a of the first electric motor system 100a is switched that the interior space 112a of the first electric motor system 100a is in fluid communication with the head space 110b of the electric motor 102b of the second electric motor system 100b. Further, the first ports 116a, 116b, the first vent ports 122a, 122b, the second vent ports 124a, 124b, the third vent ports 150a, 150b of the first electric motor system 100a and the second electric motor system 100b are closed.

Thus, only the small empty volume inside the base portion 104a, 104b or head portion 108a, 108b of the electric motors 102a, 102b needs to be filled at the field. In this case, the oil will fill from the head portion 108b of the electric motor 102b of the lower or second electric motor system 100b from the fifth port 156b and vented from the third vent port 150a of the base portion 104a of the electric motor 102a of the upper or first electric motor system 100a. Then, the second valve 152a blocks the third vent port 150a of the base portion 104a of the upper or first electric motor system 100a and connects the third port 146a of the first electric motor system 100a to the fourth port 148a of the first electric motor system 100a. Therefore, there will be communication between the two tandem electric motors 102a, 102b through the second valve 152a.

### List of reference numbers

- 100: electric motor system
- 102: electric motor
- 104: base portion
- 106: base space
- 108: head portion
- 110: head space
- 112: interior space
- 114: first line
- 116: first port
- 118: second port
- 120: first valve
- 122: first vent port
- 124: second vent port
- 126: central portion
- 128: compensator chamber
- 130: first chamber portion
- 132: second chamber portion
- 134: piston
- 136: compensator chamber vent port
- 138: motor oil line
- 140: sealing member
- 142: pressurized gas supply port
- 144: second line
- 146: third port
- 148: fourth port
- 150: third vent port
- 152: second valve
- 154: third line
- 156: fifth port
- 158: sixth port
- 160: third valve
- 162: shaft
- 164: first bearing
- 166: second bearing
- 168: lip seal
- 170: first cap
- 172: second cap
- 200: protector system
- 202: protector
- 204: base portion
- 206: base space
- 208: head portion
- 210: head space
- 212: interior space
- 214: first line
- 216: first port
- 218: second port
- 220: first valve
- 222: first vent port
- 224: second vent port
- 226: central portion
- 228: compensator chamber
- 230: first chamber portion
- 232: second chamber portion
- 234: piston
- 236: compensator chamber vent port
- 238: motor oil line
- 240: sealing member
- 242: pressurized gas supply port
- 244: second line
- 246: third port
- 248: fourth port
- 250: third vent port
- 252: second valve
- 254: third line
- 256: fifth port
- 258: sixth port
- 260: shaft
- 262: first bearing
- 264: second bearing
- 266: first sealing member
- 268: second sealing member
- 270: first cap
- 272: second cap
- 300: electric submersible pump system
- 302: electric submersible pump
- 304: well hole
- 306: well casing

## Claims

1. An electric motor system (100) for an electric submersible pump system (300), comprising
an electric motor (102) configured to operate an electric submersible pump of the electric submersible pump system (300), and
a motor oil,
wherein the electric motor (102) comprises a base portion (104) defining a base space (106), a head portion (108) defining a head space (110), an interior space (112), a first line (114), a first port (116), a second port (118), a first valve (120), a first vent port (122) and a second vent port (124), wherein the first line (114) is connected to an outside of the electric motor (102) through the first port (116), wherein the first line (114) is connected to the interior space (112) through the second port (118), wherein the interior space (112) is filled with the motor oil, wherein the first valve (120) is configured to selectively block and unblock the first line (114), wherein the first vent port (122) is configured to vent air from the interior space (112) to the outside of the electric motor (102), wherein the second vent port (124) is configured to vent air from the head space (110) to the outside of the electric motor (102), wherein the second vent port (124) is configured to be releasably connected to a compensator chamber (128),
wherein the compensator chamber (128) comprises a first chamber portion (130) filled with pressurized gas, a second chamber portion (132) filled with the motor oil, a piston (134) separating the first and second chamber portions (130, 132), a compensator chamber vent port (136), and a motor oil line (138), wherein the compensator chamber vent port (136) is configured to vent air from the second chamber portion (132), wherein the second chamber portion (132) is releasably connected to the second vent port (124) by means of the motor oil line (138).

2. The electric motor system (100) according to the preceding claim, wherein the first port (116) and/or the second port (118) are located at the base portion (104), and/or wherein the first vent port (122) and/or the second vent port (124) are located at the head portion (108).

3. The electric motor system (100) according to any preceding claim, wherein the electric motor (102) further comprises a second line (144), a third port (146), a fourth port (148), a third vent port (150), and a second valve (152), wherein the second line (144) is connected to the base space (106) through the third port (146), wherein the second line (144) is connected to the interior space (112) through the fourth port (148), wherein the second valve (152) is configured to selectively communicate the third port (146), the fourth port (148) and the third vent port (150).

4. The electric motor system (100) according to the preceding claim, wherein the third port (146), the fourth port (148) and/or the third vent port (150) are located at the base portion (104).

5. The electric motor system (100) according to any preceding claim, wherein the electric motor (102) further comprises a third line (154), a fifth port 256, a sixth port (158) and a third valve (160), wherein the third line (154) is connected to the outside of the electric motor (102) through the fifth port (156), wherein the third line (154) is connected to the head space (110) through the sixth port (158), wherein the third valve (160) is configured to selectively block and unblock the third line (154) wherein the fifth port (156) and/or the sixth port (158) are preferably located at the head portion (108).

6. The electric motor system (100) according to any preceding claim, wherein the motor oil line (138) is flexible.

7. The electric motor system (100) according to any preceding claim, further comprising a first cap (170) configured to be releasably attached to the base portion (104) so as to seal the base space (106) and/or further comprising a second cap (172) configured to be releasably attached to the head portion (108) so as to seal the head space (110).

8. A protector system (200) for an electric submersible pump system (300), comprising
a protector (202) configured to seal the electric motor (102) of the electric motor system (100) according to any of the preceding claims for operating an electric submersible pump (302) of the electric submersible pump system (300), and
a motor oil,
wherein the protector (202) comprises a base portion (204) defining a base space (206), a head portion (208) defining a head space (110), an interior space (212), a first line (214), a first port (216), a second port (218), a first valve (220), a first vent port (222) and a second vent port (224), wherein the first line (214) is connected to an outside of the protector (202) through the first port (216), wherein the first line (214) is connected to the interior space (212) through the second port (218), wherein the interior space (212) is filled with the motor oil, wherein the first valve (220) is configured to selectively block and unblock the first line (214), wherein the first vent port (222) is configured to vent air from the interior space (212) to the outside of the protector (202), wherein the second vent port (224) is configured to vent air from the head space (110) to the outside of the protector (202), wherein the second vent port (224) is configured to be releasably connected to a compensator chamber (228),
wherein the compensator chamber (228) comprises a first chamber portion (230) filled with pressurized gas, a second chamber portion (232) filled with the motor oil, a piston (234) separating the first and second chamber portions (132, 232), a compensator chamber vent port (236), and a motor oil line (238), wherein the compensator chamber vent port (236) is configured to vent air from the second chamber portion (232), wherein the second chamber portion (232) is releasably connected to the second vent port (224) by means of the motor oil line (238).

9. The protector system (200) according to the preceding claim, wherein the first port (216) and/or the second port (218) are located at the base portion (204), and/or wherein the first vent port (222) and/or the second vent port (224) are located at the head portion (208).

10. The protector system (200) according to claim 8 or 9, wherein the protector (202) further comprises a second line (244), a third port (246), a fourth port (248), a third vent port (250), and a second valve (252), wherein the second line (244) is connected to the base space 206 through the third port (246), wherein the second line (244) is connected to the interior space (212) through the fourth port (248), wherein the second valve (252) is configured to selectively communicate the third port (246), the fourth port (248) and the third vent port (250).

11. The protector system (200) according to the preceding claim, wherein the third port (246), the fourth port (248) and/or the third vent port (250) are located at the base portion 204.

12. The protector system (200) according to any one of claims 8 to 10, wherein the protector (202) further comprises a third line (254), a fifth port (256) and a sixth port (258), wherein the third line (254) is connected to the interior space (212) through the fifth port (256), wherein the third line (254) is connected to the head space (110) through the sixth port (258), wherein the fifth port (256) and/or the sixth port (258) are preferably located at the head portion (208).

13. The protector system (200) according to any one of claims 8 to 12, wherein the motor oil line (238) is flexible.

14. The protector system (200) according to any one of claims 8 to 13, further comprising a first cap (270) configured to be releasably attached to the base portion (204) so as to seal the base space (206) and/or further comprising a second cap (272) configured to be releasably attached to the head portion (208) so as to seal the head space (110).

15. An electric submersible pump system (300), comprising
an electric submersible pump (302),
at least first electric motor system (100a) according to any one of the preceding claims referring to an electric motor system (100),
at least a second electric motor system (100b) according to any one of the preceding claims referring to an electric motor system (100) and/or at least one protector system (200) according to any one of the preceding claims referring to a protector system (200),
wherein the compensation chambers (128, 228) and the motor oil lines (138, 238) are removed from the first electric motor system (100), the second electric motor system (100b) and the protector system (200)
and
the base portion (104a) of the electric motor (102a) of the first electric motor system (100a) is connected to the head portion (108b) of the electric motor (102b) of the second electric motor system (100b) such that the base space (106a) of the electric motor (102a) of the first electric motor system (100a) is in fluid communication with the head space (110b) of the electric motor (102b) of the second electric motor system (100b) and/or the base portion (204) of the protector (202) of the protector system (200) is connected to the head portion (108a) of the electric motor (102a) of the first electric motor system (100a) such that the base space (206) of the protector (202) of the protector system (200) is in fluid communication with the head space (110a) of the electric motor (102a) of the first electric motor system (100a).

## Patentansprüche

1. Elektromotorsystem (100) für ein elektrisches Tauchpumpensystem (300), umfassend
einen Elektromotor (102), der dazu ausgelegt ist, eine elektrische Tauchpumpe des elektrischen Tauchpumpensystems (300) zu betreiben, und
ein Motoröl,
wobei der Elektromotor (102) einen Basisabschnitt (104), der einen Basisraum (106) definiert, einen Kopfabschnitt (108), der einen Kopfraum (110) definiert, einen Innenraum (112), eine erste Leitung (114), einen ersten Anschluss (116), einen zweiten Anschluss (118), ein erstes Ventil (120), einen ersten Entlüftungsanschluss (122) und einen zweiten Entlüftungsanschluss (124) umfasst, wobei die erste Leitung (114) über den ersten Anschluss (116) mit einer Außenseite des Elektromotors (102) verbunden ist, wobei die erste Leitung (114) über den zweiten Anschluss (118) mit dem Innenraum (112) verbunden ist, wobei der Innenraum (112) mit dem Motoröl gefüllt ist, wobei das erste Ventil (120) dazu ausgelegt ist, die erste Leitung (114) selektiv zu sperren und freizugeben, wobei der erste Entlüftungsanschluss (122) dazu ausgelegt ist, Luft aus dem Innenraum (112) zur Außenseite des Elektromotors (102) abzuführen, wobei der zweite Entlüftungsanschluss (124) dazu ausgelegt ist, Luft aus dem Kopfraum (110) zur Außenseite des Elektromotors (102) abzuführen, wobei der zweite Entlüftungsanschluss (124) dazu ausgelegt ist, lösbar mit einer Kompensatorkammer (128) verbunden zu sein, wobei die Kompensatorkammer (128) einen ersten Kammerabschnitt (130), der mit Druckgas gefüllt ist, einen zweiten Kammerabschnitt (132), der mit dem Motoröl gefüllt ist, einen Kolben (134), der den ersten und zweiten Kammerabschnitt (130, 132) trennt, einen Kompensatorkammerentlüftungsanschluss (136) und eine Motorölleitung (138) umfasst, wobei der Kompensatorkammerentlüftungsanschluss (136) dazu ausgelegt ist, Luft aus dem zweiten Kammerabschnitt (132) abzuführen, wobei der zweite Kammerabschnitt (132) mittels der Motorölleitung (138) lösbar mit dem zweiten Entlüftungsanschluss (124) verbunden ist.

2. Elektromotorsystem (100) nach dem vorhergehenden Anspruch, wobei sich der erste Anschluss (116) und/oder der zweite Anschluss (118) an dem Basisabschnitt (104) befinden und/oder wobei sich der erste Entlüftungsanschluss (122) und/oder der zweite Entlüftungsanschluss (124) an dem Kopfabschnitt (108) befinden.

3. Elektromotorsystem (100) nach einem der vorhergehenden Ansprüche, wobei der Elektromotor (102) ferner eine zweite Leitung (144), einen dritten Anschluss (146), einen vierten Anschluss (148), einen dritten Entlüftungsanschluss (150) und ein zweites Ventil (152) umfasst, wobei die zweite Leitung (144) über den dritten Anschluss (146) mit dem Basisraum (106) verbunden ist, wobei die zweite Leitung (144) über den vierten Anschluss (148) mit dem Innenraum (112) verbunden ist, wobei das zweite Ventil (152) dazu ausgelegt ist, den dritten Anschluss (146), den vierten Anschluss (148) und den dritten Entlüftungsanschluss (150) selektiv miteinander in Verbindung zu setzen.

4. Elektromotorsystem (100) nach dem vorhergehenden Anspruch, wobei sich der dritte Anschluss (146), der vierte Anschluss (148) und/oder der dritte Entlüftungsanschluss (150) an dem Basisabschnitt (104) befinden.

5. Elektromotorsystem (100) nach einem der vorhergehenden Ansprüche, wobei der Elektromotor (102) ferner eine dritte Leitung (154), einen fünften Anschluss (256), einen sechsten Anschluss (158) und ein drittes Ventil (160) umfasst, wobei die dritte Leitung (154) über den fünften Anschluss (156) mit der Außenseite des Elektromotors (102) verbunden ist, wobei die dritte Leitung (154) über den sechsten Anschluss (158) mit dem Kopfraum (110) verbunden ist, wobei das dritte Ventil (160) dazu ausgelegt ist, die dritte Leitung (154) selektiv zu sperren und freizugeben, wobei sich der fünfte Anschluss (156) und/oder der sechste Anschluss (158) vorzugsweise an dem Kopfabschnitt (108) befinden.

6. Elektromotorsystem (100) nach einem der vorhergehenden Ansprüche, wobei die Motorölleitung (138) flexibel ist.

7. Elektromotorsystem (100) nach einem der vorhergehenden Ansprüche, ferner umfassend eine erste Kappe (170), die dazu ausgelegt ist, lösbar an dem Basisabschnitt (104) befestigt zu werden, um den Basisraum (106) abzudichten, und/oder ferner umfassend eine zweite Kappe (172), die dazu ausgelegt ist, lösbar an dem Kopfabschnitt (108) befestigt zu werden, um den Kopfraum (110) abzudichten.

8. Schutzsystem (200) für ein elektrisches Tauchpumpensystem (300), umfassend einen Schutz (202), der dazu ausgelegt ist, den Elektromotor (102) des Elektromotorsystems (100) nach einem der vorhergehenden Ansprüche zum Betreiben einer elektrischen Tauchpumpe (302) des elektrischen Tauchpumpensystems (300) abzudichten, und
ein Motoröl,
wobei der Schutz (202) einen Basisabschnitt (204), der einen Basisraum (206) definiert, einen Kopfabschnitt (208), der einen Kopfraum (110) definiert, einen Innenraum (212), eine erste Leitung (214), einen ersten Anschluss (216), einen zweiten Anschluss (218), ein erstes Ventil (220), einen ersten Entlüftungsanschluss (222) und einen zweiten Entlüftungsanschluss (224) umfasst, wobei die erste Leitung (214) über den ersten Anschluss (216) mit einer Außenseite des Schutzes (202) verbunden ist, wobei die erste Leitung (214) über den zweiten Anschluss (218) mit dem Innenraum (212) verbunden ist, wobei der Innenraum (212) mit dem Motoröl gefüllt ist, wobei das erste Ventil (220) dazu ausgelegt ist, die erste Leitung (214) selektiv zu sperren und freizugeben, wobei der erste Entlüftungsanschluss (222) dazu ausgelegt ist, Luft aus dem Innenraum (212) zur Außenseite des Schutzes (202) abzuführen, wobei der zweite Entlüftungsanschluss (224) dazu ausgelegt ist, Luft aus dem Kopfraum (110) zur Außenseite des Schutzes (202) abzuführen, wobei der zweite Entlüftungsanschluss (224) dazu ausgelegt ist, lösbar mit einer Kompensatorkammer (228) verbunden zu werden,
wobei die Kompensatorkammer (228) einen ersten Kammerabschnitt (230), der mit Druckgas gefüllt ist, einen zweiten Kammerabschnitt (232), der mit dem Motoröl gefüllt ist, einen Kolben (234), der den ersten und den zweiten Kammerabschnitt (132, 232) trennt, eine Kompensatorkammerentlüftungsöffnung (236), und eine Motorölleitung (238), wobei die Kompensatorkammerentlüftungsöffnung (236) dazu ausgelegt ist, Luft aus dem zweiten Kammerabschnitt (232) abzuführen, wobei der zweite Kammerabschnitt (232) mittels der Motorölleitung (238) lösbar mit der zweiten Entlüftungsöffnung (224) verbunden ist.

9. Schutzsystem (200) nach dem vorhergehenden Anspruch, wobei sich der erste Anschluss (216) und/oder der zweite Anschluss (218) an dem Basisabschnitt (204) befinden und/oder wobei sich der erste Entlüftungsanschluss (222) und/oder der zweite Entlüftungsanschluss (224) an dem Kopfabschnitt (208) befinden.

10. Schutzsystem (200) nach Anspruch 8 oder 9, wobei der Schutz (202) ferner eine zweite Leitung (244), einen dritten Anschluss (246), einen vierten Anschluss (248), einen dritten Entlüftungsanschluss (250) und ein zweites Ventil (252) umfasst, wobei die zweite Leitung (244) über den dritten Anschluss (246) mit dem Basisraum (206) verbunden ist, wobei die zweite Leitung (244) über den vierten Anschluss (248) mit dem Innenraum (212) verbunden ist, wobei das zweite Ventil (252) dazu ausgelegt ist, den dritten Anschluss (246), den vierten Anschluss (248) und den dritten Entlüftungsanschluss (250) selektiv miteinander in Verbindung zu setzen.

11. Schutzsystem (200) nach dem vorhergehenden Anspruch, wobei sich der dritte Anschluss (246), der vierte Anschluss (248) und/oder der dritte Entlüftungsanschluss (250) an dem Basisabschnitt (204) befinden.

12. Schutzsystem (200) nach einem der Ansprüche 8 bis 10, wobei der Schutz (202) ferner eine dritte Leitung (254), einen fünften Anschluss (256) und einen sechsten Anschluss (258) umfasst, wobei die dritte Leitung (254) über den fünften Anschluss (256) mit dem Innenraum (212) verbunden ist, wobei die dritte Leitung (254) über den sechsten Anschluss (258) mit dem Kopfraum (110) verbunden ist, wobei sich der fünfte Anschluss (256) und/oder der sechste Anschluss (258) vorzugsweise an dem Kopfabschnitt (208) befinden.

13. Schutzsystem (200) nach einem der Ansprüche 8 bis 12, wobei die Motorölleitung (238) flexibel ist.

14. Schutzsystem (200) nach einem der Ansprüche 8 bis 13, ferner umfassend eine erste Kappe (270), die dazu ausgelegt ist, lösbar an dem Basisabschnitt (204) befestigt zu werden, um den Basisraum (206) abzudichten, und/oder ferner umfassend eine zweite Kappe (272), die dazu ausgelegt ist, lösbar an dem Kopfabschnitt (208) befestigt zu werden, um den Kopfraum (110) abzudichten.

15. Elektrisches Tauchpumpensystem (300), umfassend:
eine elektrische Tauchpumpe (302),
mindestens ein erstes Elektromotorsystem (100a) nach einem der vorhergehenden Ansprüche, die sich auf ein Elektromotorsystem (100) beziehen,
mindestens ein zweites Elektromotorsystem (100b) nach einem der vorhergehenden Ansprüche, die sich auf ein Elektromotorsystem (100) beziehen, und/oder mindestens ein Schutzsystem (200) nach einem der vorhergehenden Ansprüche, die sich auf ein Schutzsystem (200) beziehen,
wobei die Kompensationskammern (128, 228) und die Motorölleitungen (138, 238) aus dem ersten Elektromotorsystem (100), dem zweiten Elektromotorsystem (100b) und dem Schutzsystem (200) entfernt werden,
und der Basisabschnitt (104a) des Elektromotors (102a) des ersten elektrischen Motorsystems (100a) mit dem Kopfabschnitt (108b) des Elektromotors (102b) des zweiten elektrischen Motorsystems (100b) verbunden ist, sodass der Basisraum (106a) des Elektromotors (102a) des ersten elektrischen Motorsystems (100a) mit dem Kopfraum (110b) des Elektromotors (102b) des zweiten elektrischen Motorsystems (100b) strömungstechnisch verbunden ist und/oder der Basisabschnitt (204) des Schutzes (202) des Schutzsystems (200) mit dem Kopfabschnitt (108a) des Elektromotors (102a) des ersten elektrischen Motorsystems (100a) verbunden ist, sodass der Basisraum (206) des Schutzes (202) des Schutzsystems (200) mit dem Kopfraum (110a) des Elektromotors (102a) des ersten elektrischen Motorsystems (100a) strömungstechnisch verbunden ist.

## Revendications

1. Système de moteur électrique (100) pour un système de pompe submersible électrique (300), comprenant :
un moteur électrique (102) configuré pour actionner une pompe submersible électrique du système de pompe submersible électrique (300), et
une huile moteur,
dans lequel le moteur électrique (102) comprend une partie de base (104) définissant un espace de base (106), une partie de tête (108) définissant un espace de tête (110), un espace intérieur (112), une première conduite (114), un premier orifice (116), un deuxième orifice (118), une première valve (120), un premier orifice d'évent (122) et un deuxième orifice d'évent (124), dans lequel la première conduite (114) est raccordée à un extérieur du moteur électrique (102) par le premier orifice (116), dans lequel la première conduite (114) est raccordée à l'espace intérieur (112) par le deuxième orifice (118), dans lequel l'espace intérieur (112) est rempli avec l'huile moteur, dans lequel la première valve (120) est configurée pour bloquer et débloquer sélectivement la première conduite (114), dans lequel le premier orifice d'évent (122) est configuré pour évacuer l'air de l'espace intérieur (112) à l'extérieur du moteur électrique (102), dans lequel le deuxième orifice d'évent (124) est configuré pour évacuer l'air de l'espace de tête (110) à l'extérieur du moteur électrique (102), dans lequel le deuxième orifice d'évent (124) est configuré pour être raccordé, de manière amovible, à une chambre de compensation (128), dans lequel la chambre de compensation (128) comprend une première partie de chambre (130) remplie avec du gaz sous pression, une seconde partie de chambre (132) remplie avec l'huile moteur, un piston (134) séparant les première et seconde parties de chambre (130, 132), un orifice d'évent de chambre de compensation (136), et une conduite d'huile moteur (138), dans lequel l'orifice d'évent de chambre de compensation (136) est configuré pour évacuer l'air de la seconde partie de chambre (132), dans lequel la seconde partie de chambre (132) est raccordée, de manière amovible, au deuxième orifice d'évent (124) au moyen de la conduite d'huile moteur (138).

2. Système de moteur électrique (100) selon la revendication précédente, dans lequel le premier orifice (116) et/ou le deuxième orifice (118) sont positionnés au niveau de la partie de base (104), et/ou dans lequel le premier orifice d'évent (122) et/ou le deuxième orifice d'évent (124) sont positionnés au niveau de la partie de tête (108).

3. Système de moteur électrique (100) selon l'une quelconque des revendications précédentes, dans lequel le moteur électrique (102) comprend en outre une deuxième conduite (144), un troisième orifice (146), un quatrième orifice (148), un troisième orifice d'évent (150), et une deuxième valve (152), dans lequel la deuxième conduite (144) est raccordée à l'espace de base (106) par le troisième orifice (146), dans lequel la deuxième conduite (144) est raccordée à l'espace intérieur (112) par le quatrième orifice (148), dans lequel la deuxième valve (152) est configurée pour faire communiquer sélectivement le troisième orifice (146), le quatrième orifice (148) et le troisième orifice d'évent (150).

4. Système de moteur électrique (100) selon la revendication précédente, dans lequel le troisième orifice (146), le quatrième orifice (148) et/ou le troisième orifice d'évent (150) sont positionnés au niveau de la partie de base (104).

5. Système de moteur électrique (100) selon l'une quelconque des revendications précédentes, dans lequel le moteur électrique (102) comprend en outre une troisième conduite (154), un cinquième orifice (256), un sixième orifice (158) et une troisième valve (160), dans lequel la troisième conduite (154) est raccordée à l'extérieur du moteur électrique (102) par le cinquième orifice (156), dans lequel la troisième conduite (154) est raccordée à l'espace de tête (110) par le sixième orifice (158), dans lequel la troisième valve (160) est configurée pour bloquer et débloquer sélectivement la troisième conduite (154), dans lequel le cinquième orifice (156) et/ou le sixième orifice (158) est sont de préférence positionnés au niveau de la partie de tête (108).

6. Système de moteur électrique (100) selon l'une quelconque des revendications précédentes, dans lequel la conduite d'huile moteur (138) est flexible.

7. Système de moteur électrique (100) selon l'une quelconque des revendications précédentes, comprenant en outre un premier capuchon (170) configuré pour être fixé, de manière amovible, à la partie de base (104) afin de sceller l'espace de base (106) et/ou comprenant en outre un second capuchon (172) configuré pour être fixé, de manière amovible, à la partie de tête (108) afin de sceller l'espace de tête (110).

8. Système de protection (200) pour un système de pompe submersible électrique (300), comprenant :
un protecteur (202) configuré pour sceller le moteur électrique (102) du système de moteur électrique (100) selon l'une quelconque des revendications précédentes afin d'actionner une pompe submersible électrique (302) du système de pompe submersible électrique (300), et
une huile moteur,
dans lequel le protecteur (202) comprend une partie de base (204) définissant un espace de base (206),
une partie de tête (208) définissant un espace de tête (110), un espace intérieur (212), une première conduite (214), un premier orifice (216), un deuxième orifice (218), une première valve (220), un premier orifice d'évent (222) et un deuxième orifice d'évent (224), dans lequel la première conduite (214) est raccordée à un extérieur du protecteur (202) par le premier orifice (216), dans lequel la première conduite (214) est raccordée à l'espace intérieur (212) par le deuxième orifice (218), dans lequel l'espace intérieur (212) est rempli avec l'huile moteur, dans lequel la première valve (220) est configurée pour bloquer et débloquer sélectivement la première conduite (214), dans lequel le premier orifice d'évent (222) est configuré pour évacuer l'air de l'espace intérieur (212) à l'extérieur du protecteur (202), dans lequel le deuxième orifice d'évent (224) est configuré pour évacuer l'air de l'espace de tête (110) à l'extérieur du protecteur (202), dans lequel le deuxième orifice d'évent (224) est configuré pour être raccordé, de manière amovible, à une chambre de compensation (228),
dans lequel la chambre de compensation (228) comprend une première partie de chambre (230) remplie avec du gaz sous pression, une seconde partie de chambre (232) remplie avec l'huile moteur, un piston (234) séparant les première et seconde parties de chambre (132, 232), un orifice d'évent de chambre de compensation (236), et une conduite d'huile moteur (238), dans lequel l'orifice d'évent de chambre de compensation (236) est configuré pour évacuer l'air de la deuxième partie de chambre (232), dans lequel la seconde partie de chambre (232) est raccordée, de manière amovible, au deuxième orifice d'évent (224) au moyen de la conduite d'huile moteur (238).

9. Système de protection (200) selon la revendication précédente, dans lequel le premier orifice (216) et/ou le deuxième orifice (218) sont positionnés au niveau de la partie de base (204), et/ou dans lequel le premier orifice d'évent (222) et/ou le deuxième orifice d'évent (224) sont positionnés au niveau de la partie de tête (208).

10. Système de protection (200) selon la revendication 8 ou 9, dans lequel le protecteur (202) comprend en outre une deuxième conduite (244), un troisième orifice (246), un quatrième orifice (248), un troisième orifice d'évent (250), et une deuxième valve (252), dans lequel la deuxième conduite (244) est raccordée à l'espace de base (206) par le troisième orifice (246), dans lequel la deuxième conduite (244) est raccordée à l'espace intérieur (212) par le quatrième orifice (248), dans lequel la deuxième valve (252) est configurée pour faire sélectivement communiquer le troisième orifice (246), le quatrième orifice (248) et le troisième orifice d'évent (250).

11. Système de protection (200) selon la revendication précédente, dans lequel le troisième orifice (246), le quatrième orifice (248) et/ou le troisième orifice d'évent (250) sont positionnés au niveau de la partie de base (204).

12. Système de protection (200) selon l'une quelconque des revendications 8 à 10, dans lequel le protecteur (202) comprend en outre une troisième conduite (254), un cinquième orifice (256) et un sixième orifice (258), dans lequel la troisième conduite (254) est raccordée à l'espace intérieur (212) par le cinquième orifice (256), dans lequel la troisième conduite (254) est raccordée à l'espace de tête (110) par le sixième orifice (258), dans lequel le cinquième orifice (256) et/ou le sixième orifice (258) sont de préférence positionnés au niveau de la partie de tête (208).

13. Système de protection (200) selon l'une quelconque des revendications 8 à 12, dans lequel la conduite d'huile moteur (238) est flexible.

14. Système de protection (200) selon l'une quelconque des revendications 8 à 13, comprenant en outre un premier capuchon (270) configuré pour être fixé, de manière amovible, à la partie de base (204) afin de sceller l'espace de base (206) et/ou comprenant en outre un second capuchon (272) configuré pour être fixé, de manière amovible, à la partie de tête (208) afin de sceller l'espace de tête (110).

15. Système de pompe submersible électrique (300) comprenant :
une pompe submersible électrique (302),
au moins un premier système de moteur électrique (100a) selon l'une quelconque des revendications précédentes en référence à un système de moteur électrique (100),
au moins un second système de moteur électrique (100b) selon l'une quelconque des revendications précédentes en référence à un système de moteur électrique (100) et/ou au moins un système de protection (200) selon l'une quelconque des revendications précédentes en référence à un système de protection (200),
dans lequel les chambres de compensation (128, 228) et les conduites d'huile de moteur (138, 238) sont retirées du premier système de moteur électrique (100), du second système de moteur électrique (100b) et du système de protection (200), et la partie de base (104a) du moteur électrique (102a) du premier système de moteur électrique (100a) est raccordée à la partie de tête (108b) du moteur électrique (102b) du second système de moteur électrique (100b) de sorte que l'espace de base (106a) du moteur électrique (102a) du premier système de moteur électrique (100a) est en communication de fluide avec l'espace de base (110b) du moteur électrique (102b) du second système de moteur électrique (100b) et/ou la partie de base (204) du protecteur (202) du système de protection (200) est raccordée à la partie de tête (108a) du moteur électrique (102a) du premier système de moteur électrique (100a) de sorte que l'espace de base (206) du protecteur (202) du système de protection (200) est en communication de fluide avec l'espace de tête (110a) du moteur électrique (102a) du premier système de moteur électrique (100a).
